# EUROPÄISCHE PATENTSCHRIFT

(11) **EP 2 546 106 B1**
(45) Veröffentlichungstag und Bekanntmachung des Hinweises auf die Patenterteilung: **12.11.2014**
(21) Anmeldenummer: 12173985.8
(22) Anmeldetag: 28.06.2012
(51) Int. Cl.: B60R 13/02

(54) **Adapter, Baugruppe mit Adapter sowie Verfahren zur Montage einer solchen Baugruppe**
Adapter, module with adapter and method for mounting such a module
Adaptateur, module avec adaptateur ainsi que le procédé de montage d'un tel module

(30) Priorität: 11.07.2011 DE 102011107080
(43) Veröffentlichungstag der Anmeldung: 16.01.2013
(73) Patentinhaber: TRW Automotive Electronics & Components GmbH, 78315 Radolfzell (DE)
(72) Erfinder: Loewe, Hubert, 66919 Weselberg (DE); Marx, Oliver, 67701 Schallodenbach (DE); Hofmann, Jürgen, 67304 Eisenberg (DE)
(74) Vertreter: Prinz & Partner mbB

(56) Entgegenhaltungen:
- EP-A1- 1 211 137
- EP-A1- 2 261 516
- WO-A1-01/50026
- DE-A1- 10 023 109
- DE-A1- 19 748 780
- DE-U1- 29 920 497
- DE-U1-202005 016 824
- DE-U1-202007 002 071

## Beschreibung

Die Erfindung betrifft einen Adapter zur fahrzeugseitigen Montage eines Bauteils, insbesondere eines Verkleidungsteils, sowie eine Baugruppe mit einem solchen Adapter. Ferner betrifft die Erfindung ein Verfahren zur Montage einer solchen Baugruppe.

Aus dem Stand der Technik sind verschiedene mehrteilige Befestigungsbaugruppen zur fahrzeugseitigen Montage von Verkleidungsteilen oder anderen Bautellen im Fahrzeuginnenraum bekannt. Diese bestehen üblicherweise aus einem Befestigungspin, der fahrzeugseitig befestigt wird, und einem Halteteil, das am Verkleidungsteil befestigt und beispielsweise an diesem vormontiert werden kann. Der Befestigungspin und das Haltetell weisen korrespondierende Rastelemente auf, die zur Montage der Bauteile ineinandergeschoben und verrastet werden können, wodurch eine einfache Montage des Verkleidungsteils am Fahrzeug möglich ist. Aufgrund von Fertigungsgenauigkeiten kann es aber gerade bei großflächigen Bauteilen vorkommen, dass die Position der fahrzeugseitig und verkleidungsteilseitig vorgesehenen Aufnahmen für den Befestigungsclip bzw. das Halteteil nicht genau übereinstimmen. Dies kann zu unerwünschten Verformungen oder ungleich großen Spaltmaßen im Fahrzeuginnenraum führen. Im Extremfall kann das Bauteil aufgrund dieser Ungenauigkeiten nicht montiert werden.

Aus dem Stand der Technik, beispielsweise aus der WO 01/50026 A1, der DE 20 2005 016 824 U1, der DE 100 23 109 A1 oder der DE 197 48 780 A1, sind deshalb Befestigungsbaugruppen bekannt, die mehrere Befestigungselemente aufweisen, die über ein Federelement begrenzt beweglich zueinander gekoppelt sind. Aufgrund der Federelemente ist aber auch ein Ausweichen der Befestigungselemente bei der Montage der Baugruppe möglich. Zudem kann sich der Abstand zwischen Fahrzeugteil und Bauteil verändern.

Aufgabe der Erfindung ist es, eine Befestigungsbaugruppe zu schaffen, die solche herstellungsbedingten Ungenauigkeiten ausgleichen kann, eine einfache Montage ermöglicht und den Abstand der Bauteile zueinander dennoch festlegt. Aufgabe der Erfindung ist es ferner, ein Verfahren zur Montage einer solchen Baugruppe bereitzustellen.

Zur Lösung der Aufgabe ist ein Adapter zur fahrzeugseitigen Befestigung eines Bauteils, insbesondere eines Verkleidungsteils vorgesehen, mit einem ersten Befestigungselement, an dem ein bauteilseitiges Halteteil befestigt werden kann, und mit einem zweiten Befestigungselement, an dem ein fahrzeugseitiges Halteelement befestigt werden kann. Das erste Befestigungselement ist im Wesentlichen zylinderförmig ausgebildet ist und umschließt das zweite Befestigungselement in Umfangsrichtung. Das erste und das zweite Befestigungselement sind über zumindest ein Federelement begrenzt beweglich miteinander gekoppelt. Um die Bewegung der Befestigungselemente zueinander auch in Richtung der Zylinderlängsachse zu beschränken, sind an beiden Befestigungselementen zusammenwirkende Anschläge vorgesehen, die den Verschiebeweg der Befestigungselemente in Richtung der Zylinderlängsachse begrenzen. Die Anschläge sind durch einen Vorsprung an einem der beiden Befestigungselemente gebildet, der in eine am anderen Befestigungselement vorgesehene Aussparung eingreift. Der Vorsprung und die Aussprung bilden die zusammenwirkenden Anschläge, die zusätzlich ein gegenseitiges Verdrehen der Befestigungselemente begrenzen. Der Adapter wird als zusätzliches Bauteil zwischen Befestigungspin und Halteteil angeordnet, wobei der Befestigungspin mit dem zweiten Befestigungselement des Adapters verbunden wird und das Halteteil mit dem ersten Befestigungselement. Durch die zwischen den Befestigungselementen angeordnete Feder sind diese begrenzt zueinander beweglich. Dadurch können Herstellungstoleranzen durch ein gegenseitiges Verschieben der Befestigungselemente ausgeglichen werden. Da die Befestigungselemente stets miteinander so gekoppelt sind, dass der Verschiebeweg der Befestigungselemente relativ zueinander begrenzt ist, ist dennoch ein sicherer Halt des Bauteils im Fahrzeug gewährleistet. Durch die Federelemente wird zudem eine Rückstellkraft bereitgestellt, die unerwünschte Bewegungen des Bauteils minimiert. Die erfindungsgemäßen Anschläge stellen sicher, dass die Befestigungselemente beim Einschieben des Halteelements oder des Halteteils nicht in Richtung der Zylinderlängsachse ausweichen können. Dadurch ist vor allem, wenn die Verbindung zwischen den Bauteilen über Rastverbindungen hergestellt wird, eine einfache Montage sichergestellt. Diese Aussparung kann beispielsweise auch als Führung dienen, in der das Befestigungselement durch den Vorsprung bei einer Verschiebung in Richtung der Zylinderlängsachse geführt wird. Der gewünschte zulässige Drehwinkel kann sehr genau durch eine entsprechend große Aussparung eingestellt werden.

Das erste Befestigungselement ist im Wesentlichen zylinderförmig ausgebildet und umschließt das zweite Befestigungselement in Umfangsrichtung. Die Befestigungselemente sind also ineinander angeordnet, wodurch die Bauhöhe des Adapters in Richtung der Zylinderlängsachse reduziert werden kann. Zudem bildet das äußere, erste Befestigungselement eine Einfassung für das innere, zweite Befestigungselement, die die Bewegung des zweiten Befestigungselements begrenzt. Somit ist trotz der Beweglichkeit der Befestigungselemente zueinander eine gewisse Fixierung vorhanden, die ein unkontrolliertes Verschieben des Bauteils verhindert bzw. den Verschiebeweg begrenzt.

Das zweite Befestigungselement kann ebenfalls im Wesentlichen zylinderförmig ausgebildet sein, wobei die Zylinderlängsachsen beider Befestigungselemente konzentrisch sind. Im Anlieferungszustand hat der Adapter so in alle Richtungen senkrecht zur Zylinderlängsachse gleich große Ausgleichsmöglichkeiten. Durch das Verhältnis der Durchmesser der Befestigungselemente zueinander kann das gewünschte Spiel sehr genau definiert werden, sodass ein idealer Kompromiss zwischen Toleranzausgleich, Spiel des Bauteils und ausreichendem Halt des Verkleidungsteils sichergestellt werden kann.

Das Federelement erstreckt sich vorzugsweise in einem Querschnitt senkrecht zur Zylinderlängsachse spiralförmig vom erstem zum zweiten Befestigungselement. Dies ermöglicht zusätzlich zur Möglichkeit des Toleranzausgleichs in der Querschnittsebene senkrecht zur Zylinderlängsachse auch eine gewisse Verdrehmöglichkeit der Befestigungselemente zueinander sowie einen Ausgleich in Richtung der Zylinderlängsachse.

Um in alle Richtungen in der Querschnittsebene eine annähernd gleich große Rückstellkraft bereitzustellen, sind beispielsweise mehrere, in Umfangsrichtung gleichmäßig verteilt angeordnete Federelemente vorgesehen.

Das erste und/oder das zweite Befestigungselement weist beispielsweise eine Aufnahme für ein fahrzeugseitiges Halteelement oder ein bauteilseitiges Halteteil auf.

Die Aufnahme weist beispielsweise Rastelemente auf, die mit fahrzeugseitigen oder bauteilseitigen Rastelementen zusammenwirken können, so dass eine werkzeuglose Montage des Bauteils im Fahrzeug möglich ist.

Erfindungsgemäß ist des Weiteren eine Baugruppe zur fahrzeugseitigen Befestigung eines Bauteils, insbesondere eines Verkleidungsteils, vorgesehen, mit einem erfindungsgemäßen Adapter, einem Befestigungspin, der fahrzeugseitig befestigt werden kann, und einem Halteteil, das am Bauteil, insbesondere am Verkleidungsteil befestigt werden kann, wobei der Adapter eine begrenzte Bewegung zwischen Befestigungspin und Halteteil ermöglicht.

Der Befestigungspin weist beispielsweise einen Rastvorsprung auf, der in eine fahrzeugseitige Öffnung eingeschoben und in dieser, insbesondere durch Verrastung, fixiert werden kann, sowie einen Bolzen, der in eine Aufnahme des zweiten Befestigungselements des Adapters eingeschoben und in dieser fixiert werden kann.

Der Befestigungspin kann eine Dichtung zur Abdichtung der Öffnung aufweisen.

Die Dichtung des Befestigungspins kann aus einem thermoplastischen Elastomer bestehen. Beispielsweise kann für das thermoplastische Elastomer ein Polyester-Elastomer verwendet werden. Nach dem Einschieben des Befestigungspins in die fahrzeugseitige Öffnung kann das thermoplastische Elastomer unter einer Temperatureinwirkung plastifiziert werden. Dies ermöglicht eine Verschmelzung beziehungsweise Verklebung der Dichtung des Befestigungspins mit dem die fahrzeugseitige Öffnung umgebenden Karosseriebauteil. Es besteht die Möglichkeit, den Befestigungspin vor einer Lackierung des Karosseriebauteils in die fahrzeugseitige Öffnung einzufügen, damit unter Einwirkung der zum Aushärten des Lackes erforderlichen Temperaturzufuhr das Elastomer plastifiziert wird. Weiterhin besteht bei einem Reparaturfall, bei dem der Befestigungspin erneut fixiert werden muss, die Möglichkeit, dass die Verklebung der Dichtung mittels eines handelsüblichen Heißluftgerätes vorgenommen werden kann. Ebenso versteht es sich, dass das Verkleben der Dichtung eine zusätzliche Fixierung des Befestigungspins mit dem die fahrzeugseitige Öffnung umgebende Karosseriebauteil bewirkt.

Das Halteteil kann einstückig mit dem Bauteil verbunden sein, sodass dieses nicht zusätzlich am Bauteil montiert werden muss, sondern unverlierbar mit diesem verbunden ist. Da der Toleranzausgleich ausschließlich über den Adapter erfolgt, kann das Halteteil fest mit dem Bauteil verbunden werden, da dieses keine Ausgleichsfunktion mehr erfüllen muss.

Erfindungsgemäß ist des Weiteren ein Verfahren zur Montage einer solchen Baugruppe vorgesehen, das folgende Schritte aufweist:
- der Befestigungspin wird in eine fahrzeugseitige Öffnung eingeschoben und in dieser fixiert;
- der Adapter wird am Halteteil des Bauteils befestigt; und
- der Adapter wird mit dem Befestigungspin verbunden.

Der Befestigungspin kann derart mit dem Fahrzeug verklebt werden, dass die fahrzeugseitige Öffnung abgedichtet ist.

Das Verfahren kann alternativ auch mit den folgenden Schritten durchgeführt werden:
- der Adapter wird am Halteteil des Bauteils befestigt;
- der Adapter wird mit dem Befestigungspin verbunden; und
- der Befestigungspin wird in eine fahrzeugseitige Öffnung eingeschoben und in dieser fixiert.

Bei diesem Verfahren wird die gesamte Baugruppe am Bauteil vormontiert und erst anschließend fahrzeugseitig montiert. In diesem Fall kann eine Dichtfunktion über eine flexible Dichtung am Befestigungspin hergestellt werden. Diese erzielt auch ohne Verkleben mit dem Fahrzeug eine ausreichende Dichtigkeit.

Weitere Vorteile finden sich in der nachfolgenden Beschreibung in Verbindung mit den beigefügten Zeichnungen. In diesen zeigen:
- Figur 1 eine perspektivische Ansicht eines erfindungsgemäßen Adapters,
- Figur 2 eine Draufsicht auf den Adapter aus Figur 1,
- Figur 3 eine zweite perspektivische Ansicht des Adapters aus Figur 1,

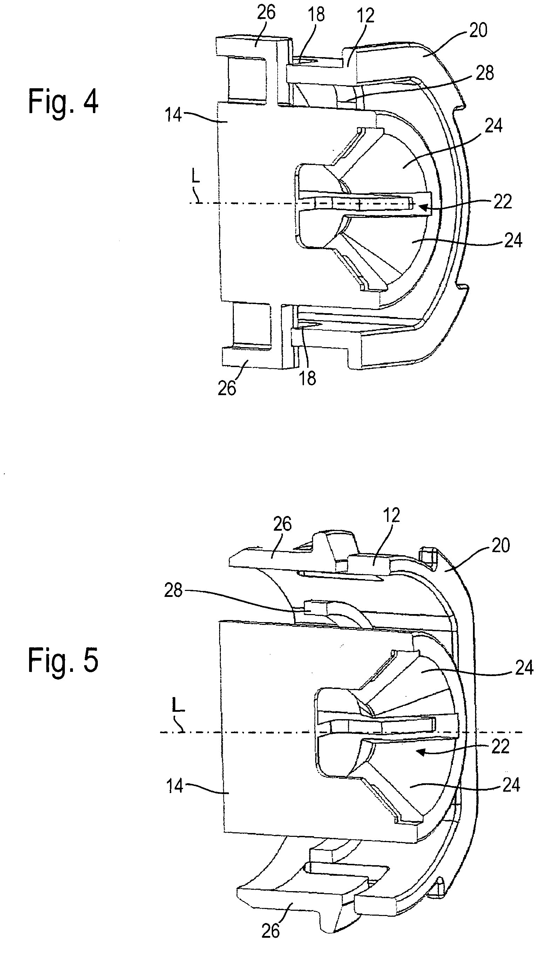

- Figur 4 eine Schnittansicht in der Ebene IV-IV aus Figur 2,
- Figur 5 eine Schnittansicht in der Ebene V-V aus Figur 2,
- Figur 6 eine erfindungsgemäße Baugruppe,
- Figur 7 einen ersten Montageschritt der erfindungsgemäßen Baugruppe aus Figur 6,
- Figur 8 einen Querschnitt durch die montierte Baugruppe aus Figur 6,
- Figur 9 einen ersten Montageschritt eines zweiten Montageverfahrens der Baugruppe aus Figur 6,
- Figur 10 einen zweiten Montageschritt des zweiten Montageverfahrens,
- Figur 11 einen dritten Montageschritt des zweiten Montageverfahrens, und
- Figur 12 einen vierten Montageschritt des zweiten Montageverfahrens.

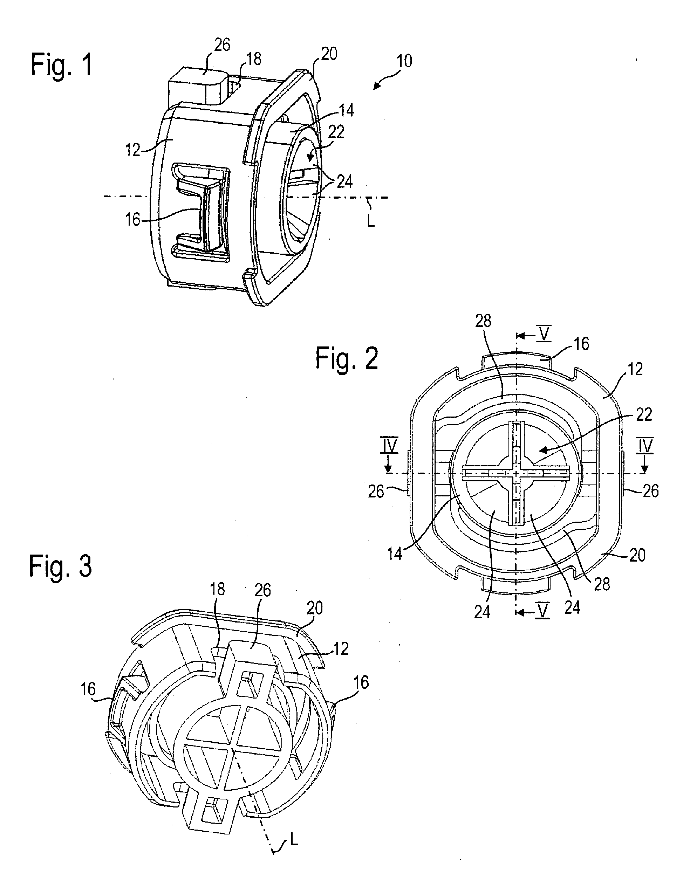

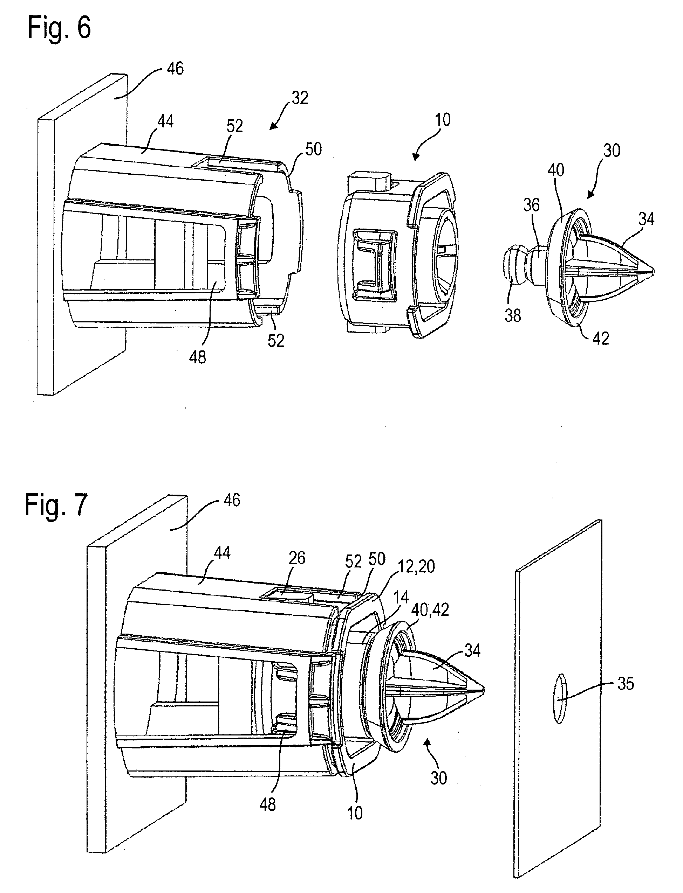

In Figur 1 ist ein Adapter 10 zur fahrzeugseitigen Montage eines Bauteils 46 gezeigt. Am Adapter 10 kann dazu ein Halteteil 32, das mit einem Bauteil, beispielsweise einem Innenraumverkleidungsteil, verbunden ist, sowie ein fahrzeugseitiges Halteelement befestigt werden (siehe Figur 6). Der Adapter 10 hat dazu ein erstes Befestigungselement 12, an dem das Halteteil 32 befestigt werden kann, sowie ein zweites Befestigungselement 14 zur Befestigung des fahrzeugseitigen Halteelements.

Beide Befestigungselemente 12, 14 sind im Wesentlichen zylinderförmig ausgebildet. Wie insbesondere in Fugr 2 zu sehen ist, umschließt das erste Befestigungselement 12 das zweite Befestigungselement 14 in Umfangsrichtung, wobei die Zylinderlängsachsen L beider Befestigungselemente 12, 14 konzentrisch sind.

Zur Befestigung des Halteteil 32 sind am ersten Befestigungselement 12 zwei gegenüberliegende Rastvorsprünge 16 vorgesehen, die am bauteilseitigen Halteteil 32 verrasten können. Des Weiteren weist das erste Befestigungselement 12 zwei sich in Zylinderlängsrichtung L erstreckende Aussparungen 18 sowie einen Flansch 20 auf.

Das zweite Befestigungselement 14 weist eine Aufnahme 22 mit Rastelementen 24 auf, in die ein fahrzeugseitiges Halteelement, beispielsweise ein Befestigungspin 30, eingeschoben werden kann. Wie insbesondere in den Figuren 2 und 3 zu sehen ist, sind am zweiten Befestigungselement 14 zwei senkrecht zur Zylinderlängsachse L vorstehende Vorsprünge 26 vorgesehen, die in den Aussparungen 18 angeordnet sind, ohne jedoch im in den Figuren 1 bis 3 dargestellten Anlieferungszustand am Rand der Aussparung 18 anzuliegen. Die Aussparung 18 bildet, wie im Folgenden dargestellt wird, gemeinsam mit den Vorsprüngen 26 jeweils einen Anschlag, der die Bewegung der Befestigungselemente 12, 14 zueinander begrenzt.

Der Adapter 10 dient dem Toleranzausgleich zwischen Halteelement und Halteteil 32. Dazu sind die mit dem Halteteil 32 und dem Halteelement verbundenen Befestigungselement 12, 14, wie im folgenden erläutert wird, begrenzt beweglich zueinander ausgebildet, so dass durch ein Verschieben der Befestigungselemente 12, 14 gegeneinander Fertigungstoleranzen bei der Position des bauteilseitigen Halteteils 32 und des fahrzeugseitigen Halteelements ausgeglichen werden können.

Wie insbesondere in Figur 2 zu sehen ist, sind das erste und das zweite Befestigungselement 12, 14 über Federelemente 28 miteinander verbunden, die das zweite Befestigungselement mit einer Rückstellkraft beaufschlagen, sobald dieses aus der in den Figuren 1 bis 3 gezeigten Mittellage verschoben wird. Die Federelemente 28 erstrecken sich in der hier gezeigten Ausführungsform spiralförmig vom äußeren, ersten Befestigungselement 12 zum inneren, zweiten Befestigungselement 14.

Durch diese Federelemente 28 ist das zweite Befestigungselement 14 gewissermaßen schwimmend im ersten Befestigungselement 12 gelagert. Das heißt, das zweite Befestigungselement 14 ist in einer Ebene senkrecht zur Zylinderlängsachse L verschieblich im ersten Befestigungselement 12 gelagert. Durch die Flexibilität der Federelemente 28 ist darüber hinaus eine gewisse Verdrehung um die Zylinderlängsachse L sowie eine Bewegung in Richtung der Zylinderlängsachse ermöglicht.

Die Bewegung in der Ebene senkrecht zur Zylinderlängsachse wird dabei durch das äußere erste Befestigungselement 12 begrenzt. Eine Bewegung in Richtung der Zylinderlängsachse L wird durch die von den Aussparungen 18 und den Vorsprüngen 26 gebildeten Anschläge begrenzt.

Eine Baugruppe mit einem solchen Adapter 10 ist in Figur 6 dargestellt. Die Baugruppe weist neben dem Adapter 10 einen Befestigungspin 30 sowie ein Halteteil 32 auf.

Der Befestigungspin 30 hat einen Rastvorsprung 34, der in eine fahrzeugseitige Öffnung 35 eingeschoben und in dieser verrastet werden kann (siehe Figur 7). Des Weiteren weist der Befestigungspin 30 einen Bolzen 36 auf, der in die Aufnahme 22 der zweiten Befestigungselements 14 des Adapters 10 eingeschoben werden kann. Der Bolzen 36 weist einen Kopf 38 auf, der in die in der Aufnahme 22 vorgesehenen Rastelemente 24 einrasten kann. Idealerweise sind die Rastelemente so ausgestaltet, dass sie den Kopf des Bolzens formschlüssig umgreifen. Des Weiteren ist am Befestigungspin 30 ein umlaufender Flansch 40 vorgesehen, der am Fahrzeug anliegen kann, sowie eine umlaufende Dichtung 42, die der Abdichtung der Öffnung 35 dient.

Das Halteteil 32 ist hier im Wesentlichen durch einen zylindrischen Dom 44 gebildet, der in der hier dargestellten Ausführungsform einstückig mit dem zu befestigenden Bauteil 46 ausgebildet ist. Der Durchmesser des Domes 44 ist so gewählt, dass der Adapter 10 teilweise in diesen eingeschoben werden kann, wobei der Durchmesser des Domes 44 kleiner ist als der Durchmesser Flansch 20 des Adapters 10, so dass der Flansch 20 in montiertem Zustand am vorderen Ende 50 des Domes 44 anliegt.

An der Außenwand des Halteteils 32 sind erste Aussparungen 48 vorgesehen, in die die Rastvorsprünge 16 des Adapters eingreifen können, wodurch der Adapter 10 am Halteteil 32 fixiert werden kann. Des Weiteren sind am Dom 44 zweite Aussparungen 52 vorgesehen, in denen zusätzlich zu den Aussparungen 18 des Adapters 10 bei montierter Baugruppe die Vorsprünge 26 des Adapters 10 geführt werden.

In der hier dargestellten Ausführungsform wird in einem ersten Montageschritt der Adapter 10 am Halteteil 32 befestigt und der Befestigungspin 30 in den Adapter 10 eingeschoben. Anschließend wird die fertig montierte Baugruppe gemeinsam mit dem Bauteil 46 fahrzeugseitig montiert, indem der Befestigungspin 30 in einer Einschubrichtung E in die Öffnung 35 eingeschoben und in dieser verrastet wird (siehe Figur 7).

Wie insbesondere in Figur 7 gezeigt ist, bilden die zweiten Aussparungen 52 in montiertem Zustand der Baugruppe einen weiteren Anschlag für den Vorsprung 26 des Adapters 10. Während die am ersten Befestigungselement 12 vorgesehene Aussparung 18 die Bewegung der Befestigungselemente 12, 14 lediglich in Einschubrichtung E begrenzen kann, erfüllt die zweite Aussparung 52 diese Funktion entgegen der Einschubrichtung E, sodass das zweite Befestigungselement 14 nur eine begrenzte Beweglichkeit in beide Richtungen der Zylinderlängsachsen L hat. Dies ist insbesondere wichtig, um den Befestigungspin 30 entgegen des Widerstands der Rastelemente 24 in die Aufnahme 22 einschieben zu können. Würde das zweite Befestigungselement 14 nicht durch die an den zweiten Aussparungen 52 anliegenden Vorsprünge 26 an einer Bewegung entgegen der Einschubrichtung E gehindert, würde das zweite Befestigungselement 14 beim Einschieben des Befestigungspins 30 entgegen der Einschubrichtung E ausweichen, sodass ein Einführen des Befestigungspins 30 in die Aufnahme 22 nicht möglich oder zumindest erheblich erschwert wäre.

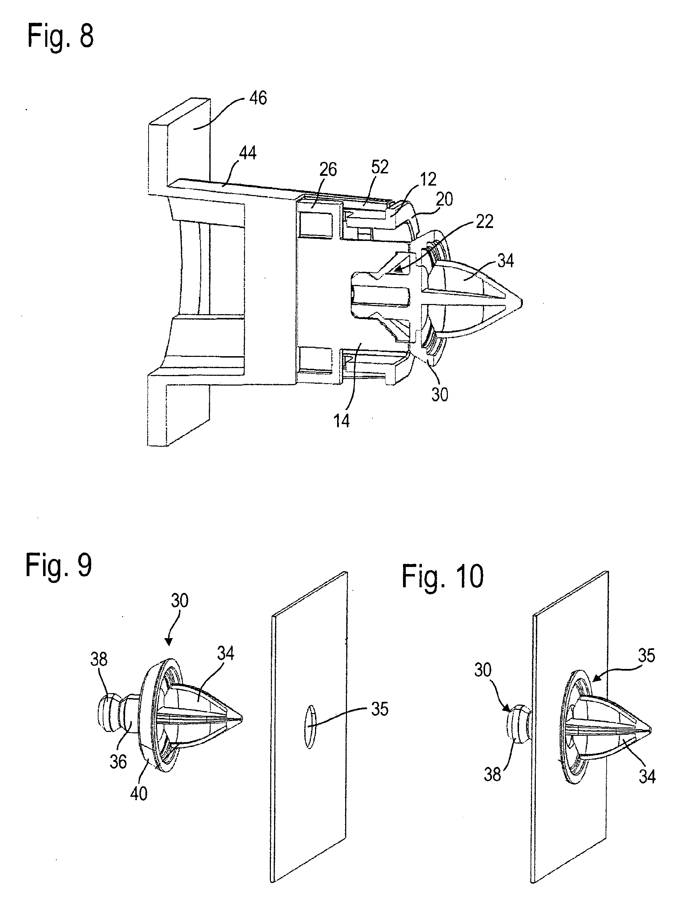

In Figur 8 ist die erfindungsgemäße Baugruppe im Querschnitt dargestellt. Wie insbesondere in Figur 8 zu sehen ist, ist die Bauhöhe der erfindungsgemäßen Baugruppe durch die ineinanderliegenden Befestigungselemente 12, 14 nur unwesentlich höher wie die Bauhöhe einer Baugruppe ohne einen solchen Adapter 10.

Eine zweite Montagemöglichkeit der erfindungsgemäßen Baugruppe ist in den Figuren 9 bis 12 dargestellt. In dieser Ausführungsform wird zuerst der Befestigungspin 30 in die Öffnung 35 eingeschoben und an dieser fixiert. Anschließend wird das Fahrzeugteil mit dem daran befestigten Befestigungspin 30 lackiert, wobei durch das anschließende Erhitzen des Lackes ein Aufschmelzen und Verkleben der Dichtung 42 erfolgt, sodass eine besonders gute Abdichtung der Öffnung 35 gewährleistet ist (Figur 10).

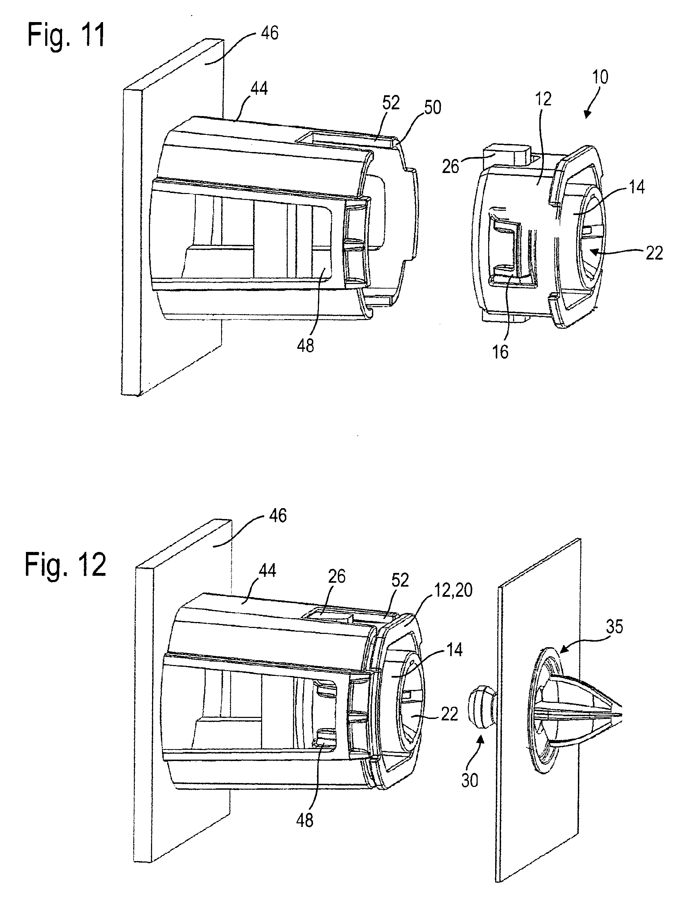

Anschließend wird der Adapter 10 am Halteteil 32 montiert (Figur 11). Erst im letzten Montageschritt wird der Adapter 10 mit dem daran befestigten Halteteil 32 bzw. dem Bauteil 46 am Befestigungspin 30 befestigt. Da auch in dieser Ausführungsform die Bewegung des zweiten Befestigungselements 14 durch die zweiten Aussparungen 52 des Halteteils 32 beschränkt sind, ist auch hier ein Ausweichen des zweiten Befestigungselements 14 beim Einschieben des Befestigungspins 30 ausgeschlossen.

## Patentansprüche

1. Adapter (10) zur fahrzeugseitigen Befestigung eines Bauteils (46), insbesondere eines Verkleidungsteils, mit einem ersten Befestigungselement (12), an dem ein bauteilseitiges Halteteil (32) befestigt werden kann, und mit einem zweiten Befestigungselement (14), an dem ein fahrzeugseitiges Halteelement befestigt werden kann, wobei das erste Befestigungselement (12) im Wesentlichen zylinderförmig ausgebildet ist und das zweite Befestigungselement (14) in Umfangsrichtung umschließt und wobei das erste und das zweite Befestigungselement (12, 14) über zumindest ein Federelement (28) begrenzt beweglich miteinander gekoppelt und verbunden sind, wobei am ersten Befestigungselement (12) und am zweiten Befestigungselement (14) zusammenwirkende Anschläge vorgesehen sind, die den Verschiebeweg der Befestigungselemente (12, 14) zueinander in Richtung der Zylinderlängsachse (L) begrenzen, **dadurch gekennzeichnet, dass** an einem der Befestigungselemente (12, 14) ein Vorsprung (26) vorgesehen ist, der in eine am anderen Befestigungselement (12, 14) vorgesehene Aussparung (18) eingreift, wobei der Vorsprung (26) und die Aussprung (18) die zusammenwirkenden Anschläge bilden, die zusätzlich ein gegenseitiges Verdrehen der Befestigungselemente (12, 14) begrenzen.

2. Adapter nach Anspruch 1, **dadurch gekennzeichnet, dass** das zweite Befestigungselement (14) im Wesentlichen zylinderförmig ausgebildet ist, wobei die Zylinderlängsachsen (L) beider Befestigungselemente (12, 14) konzentrisch sind.

3. Adapter nach Anspruch 1 oder 2, **dadurch gekennzeichnet, dass** sich das Federelement (28) in einem Querschnitt senkrecht zur Zylinderlängsachse (L) spiralförmig vom ersten Befestigungselement (12) zum zweiten Befestigungselement (14) erstreckt.

4. Adapter nach einem der vorhergehenden Ansprüche, **dadurch gekennzeichnet, dass** mehrere, in Umfangsrichtung gleichmäßig verteilt angeordnete Federelemente (28) vorgesehen sind.

5. Adapter nach einem der vorhergehenden Ansprüche, **dadurch gekennzeichnet, dass** das erste und/oder das zweite Befestigungselement (12, 14) eine Aufnahme (22) für ein fahrzeugseitiges Halteelement oder ein bauteilseitiges Halteteil (32) aufweist.

6. Adapter nach Anspruch 5, **dadurch gekennzeichnet, dass** die Aufnahme (22) Rastelemente (24) aufweist.

7. Baugruppe zur fahrzeugseitigen Befestigung eines Bauteils (46), insbesondere eines Verkleidungsteils, mit einem Adapter (10) nach einem der vorhergehenden Ansprüche, einem Befestigungspin (30), der fahrzeugseitig befestigt werden kann, und einem Halteteil (32), das am Bauteil (46), insbesondere am Verkleidungsteil, befestigt werden kann, wobei der Adapter (10) eine begrenzte Bewegung zwischen Befestigungspin (30) und Halteteil (32) ermöglicht.

8. Baugruppe nach Anspruch 7, **dadurch gekennzeichnet, dass** der Befestigungspin (30) einen Rastvorsprung (34) aufweist, der in eine fahrzeugseitige Öffnung (35) geschoben und in dieser insbesondere durch eine Verrastung fixiert werden kann, sowie einen Bolzen (36), der in eine Aufnahme (22) des zweiten Befestigungselements (14) des Adapters (10) eingeschoben und in dieser fixiert werden kann.

9. Baugruppe nach Anspruch 7 oder 8, **dadurch gekennzeichnet, dass** der Befestigungspin (30) eine Dichtung (42) zur Abdichtung der Öffnung (35) aufweist.

10. Baugruppe nach einem der Ansprüche 7 bis 9, **dadurch gekennzeichnet, dass** das Halteteil (32) einstückig mit dem Bauteil (46) verbunden ist.

11. Verfahren zur Montage einer Baugruppe nach einem der Ansprüche 7 bis 10 mit folgenden Schritten:
- der Befestigungspin (30) wird in eine fahrzeugseitige Öffnung (35) eingeschoben und in dieser fixiert;
- der Adapter (10) wird am Halteteil (32) des Bauteils (46) befestigt; und
- der Adapter (10) wird mit dem Befestigungspin (30) verbunden.

12. Verfahren nach Anspruch 11, **dadurch gekennzeichnet, dass** der Befestigungspin (30) derart mit dem Fahrzeug verklebt wird, dass die fahrzeugseitige Öffnung (35) abgedichtet ist.

13. Verfahren zur Montage einer Baugruppe nach einem der Ansprüche 7 bis 10 mit folgenden Schritten:
- der Adapter (10) wird am Halteteil (32) des Bauteils (46) befestigt;
- der Adapter (10) wird mit dem Befestigungspin (30) verbunden; und
- der Befestigungspin (30) wird in eine fahrzeugseitige Öffnung (35) eingeschoben und in dieser fixiert.

## Claims

1. An adapter (10) for the vehicle-side fastening of a component (46), in particular of a lining part, comprising a first fastening element (12) to which a component-side holding part (32) can be fastened, and a second fastening element (14) to which a vehicle-side holding element can be fastened, the first fastening element (12) being formed to be substantially cylinder-shaped and enclosing the second fastening element (14) in the circumferential direction, and the first and second fastening elements (12, 14) being coupled and connected to each other via at least one spring element (28) so as to be movable to a limited extent, with cooperating stop elements being provided on the first fastening element (12) and on the second fastening element (14), the stop elements limiting the displacement path of the fastening elements (12, 14) relative to each other in the direction of the cylinder longitudinal axis (L), **characterized in that** a protrusion (26) is provided on one of the fastening elements (12, 14) and engages in a recess (18) provided on the other fastening element (12, 14), the protrusion (26) and the recess (18) constituting the cooperating stop elements which additionally limit a mutual rotation of the fastening elements (12, 14).

2. The adapter according to claim 1, **characterized in that** the second fastening element (14) is formed to be substantially cylinder-shaped, the cylinder longitudinal axes (L) of both fastening elements (12, 14) being concentric.

3. The adapter according to claim 1 or 2, **characterized in that** the spring element (28), in a cross-section perpendicular to the cylinder longitudinal axis (L), extends spirally from the first fastening element (12) to the second fastening element (14).

4. The adapter according to any of the preceding claims, **characterized in that** several spring elements (28) are provided which are arranged so as to be uniformly distributed in the circumferential direction.

5. The adapter according to any of the preceding claims, **characterized in that** the first and/or the second fastening element (12, 14) include(s) a receptacle (22) for a vehicle-side holding element or a component-side holding part (32).

6. The adapter according to claim 5, **characterized in that** the receptacle (22) includes latching elements (24).

7. An assembly unit for the vehicle-side fastening of a component (46), in particular of a lining part, comprising an adapter (10) according to any of the preceding claims, a fastening pin (30) which can be fastened on the vehicle side, and a holding part (32) which can be fastened to the component (46), in particular to the lining part, the adapter (10) allowing a limited movement between the fastening pin (30) and the holding part (32).

8. The assembly unit according to claim 7, **characterized in that** the fastening pin (30) includes a latching protrusion (34) which can be pushed into a vehicle-side opening (35) and can be fixed therein in particular by a latching mechanism, as well as a bolt (36) which can be inserted in a receptacle (22) of the second fastening element (14) of the adapter (10) and can be fixed therein.

9. The assembly unit according to claim 7 or 8, **characterized in that** the fastening pin (30) includes a gasket (42) for sealing the opening (35).

10. The assembly unit according to any of claims 7 to 9, **characterized in that** the holding part (32) is integrally connected to the component (46).

11. A method of installing an assembly unit according to any of claims 7 to 10, comprising the following steps:
- the fastening pin (30) is inserted in a vehicle-side opening (35) and fixed therein;
- the adapter (10) is fastened to the holding part (32) of the component (46); and
- the adapter (10) is connected to the fastening pin (30).

12. The method according to claim 11, **characterized in that** the fastening pin (30) is glued to the vehicle in such a manner that the vehicle-side opening (35) is sealed.

13. A method of installing an assembly unit according to any of claims 7 to 10, comprising the following steps:
- the adapter (10) is fastened to the holding part (32) of the component (46);
- the adapter (10) is connected to the fastening pin (30); and
- the fastening pin (30) is inserted in a vehicle-side opening (35) and fixed therein.

## Revendications

1. Adaptateur (10) pour la fixation côté véhicule d'un composant (46), en particulier d'une pièce de revêtement, comprenant un premier élément de fixation (12) sur lequel une pièce de retenue (32) côté composant peut être fixée, et un deuxième élément de fixation (14) sur lequel un élément de retenue côté véhicule peut être fixé, le premier élément de fixation (12) étant réalisé de manière sensiblement cylindrique et entourant le deuxième élément de fixation (14) dans le sens périphérique, et le premier et le deuxième élément de fixation (12, 14) étant couplés et reliés l'un à l'autre de manière à être mobiles de façon limitée par l'intermédiaire d'au moins un élément ressort (28), des butées coopérant les unes avec les autres étant prévues sur le premier élément de fixation (12) et sur le deuxième élément de fixation (14), lesquelles limitent le trajet de déplacement des éléments de fixation (12, 14) l'un par rapport à l'autre dans le sens de l'axe longitudinal de cylindre (L), **caractérisé en ce qu'**il est prévu sur l'un des éléments de fixation (12, 14) une saillie (26) qui s'engage dans un évidement (18) prévu sur l'autre élément de fixation (12, 14), la saillie (26) et l'évidement (18) formant les butées coopérantes qui limitent en plus une torsion des éléments de fixation (12, 14) l'un par rapport à l'autre.

2. Adaptateur selon la revendication 1, **caractérisé en ce que** le deuxième élément de fixation (14) est réalisé de manière sensiblement cylindrique, les axes longitudinaux de cylindre (L) des deux éléments de fixation (12, 14) étant concentriques.

3. Adaptateur selon la revendication 1 ou 2, **caractérisé en ce que** l'élément ressort (28) s'étend dans une section transversale perpendiculaire à l'axe longitudinal de cylindre (L) en spirale depuis le premier élément de fixation (12) vers le deuxième élément de fixation (14).

4. Adaptateur selon l'une des revendications précédentes, **caractérisé en ce qu'**il est prévu plusieurs éléments ressort (28) agencés de manière à être régulièrement répartis dans le sens périphérique.

5. Adaptateur selon l'une des revendications précédentes, **caractérisé en ce que** le premier et/ou le deuxième élément de fixation (12, 14) présente un logement (22) pour un élément de retenue côté véhicule ou une pièce de retenue (32) côté composant.

6. Adaptateur selon la revendication 5, **caractérisé en ce que** le logement (22) présente des éléments d'enclenchement (24).

7. Ensemble pour la fixation côté véhicule d'un composant (46), en particulier d'une pièce de revêtement, comprenant un adaptateur (10) selon l'une des revendications précédentes, un pion de fixation (30) apte à être fixé côté véhicule, et une pièce de retenue (32) apte à être fixée sur le composant (46), en particulier sur la pièce de revêtement, l'adaptateur (10) permettant un mouvement limité entre le pion de fixation (30) et la pièce de retenue (32).

8. Ensemble selon la revendication 7, **caractérisé en ce que** le pion de fixation (30) présente une saillie d'enclenchement (34) qui peut être poussée dans un orifice (35) côté véhicule et être fixée dans celui-ci en particulier au moyen d'un enclenchement, et un boulon (36) qui peut être inséré dans un logement (22) du deuxième élément de fixation (14) de l'adaptateur (10) et être fixé dans celui-ci.

9. Ensemble selon la revendication 7 ou 8, **caractérisé en ce que** le pion de fixation (30) présente un joint d'étanchéité (42) pour l'étanchement de l'orifice (35).

10. Ensemble selon l'une des revendications 7 à 9, **caractérisé en ce que** la pièce de retenue (32) est reliée d'un seul tenant au composant (46).

11. Procédé de montage d'un ensemble selon l'une des revendications 7 à 10, comprenant les étapes suivantes :
- le pion de fixation (30) est inséré dans un orifice (35) côté véhicule et est fixé dans celui-ci ;
- l'adaptateur (10) est fixé sur la pièce de retenue (32) du composant (46) ; et
- l'adaptateur (10) est relié au pion de fixation (30).

12. Procédé selon la revendication 11, **caractérisé en ce que** le pion de fixation (30) est collé au véhicule de manière à étancher l'orifice (35) côté véhicule.

13. Procédé de montage d'un ensemble selon l'une des revendications 7 à 10, comprenant les étapes suivantes :
- l'adaptateur (10) est fixé sur la pièce de retenue (32) du composant (46) ;
- l'adaptateur (10) est relié au pion de fixation (30) ; et
- le pion de fixation (30) est inséré dans un orifice (35) côté véhicule et est fixé dans celui-ci.
